# EUROPÄISCHE PATENTSCHRIFT

(11) **EP 2 949 531 B1**
(45) Veröffentlichungstag und Bekanntmachung des Hinweises auf die Patenterteilung: **30.06.2021**
(21) Anmeldenummer: 15000865.4
(22) Anmeldetag: 24.03.2015
(51) Int. Cl.: B60W 30/02, B60W 30/06, B60W 40/105, B60W 40/10

(54) **VERFAHREN UND FAHRERASSISTENZSYSTEM ZUR ERMITTLUNG FAHRDYNAMISCHER ZUSTÄNDE EINES NUTZFAHRZEUGS**
METHOD AND DRIVER ASSISTANCE SYSTEM FOR DETERMINING DYNAMIC DRIVING STATES IN A COMMERCIAL VEHICLE
PROCÉDÉ ET SYSTÈME D'ASSISTANCE DU CONDUCTEUR DESTINÉS À DÉTECTER DES ÉTATS DE LA DYNAMIQUE D'UN VÉHICULE UTILITAIRE

(30) Priorität: 27.05.2014 DE 102014007900
(43) Veröffentlichungstag der Anmeldung: 02.12.2015
(60) Teilanmeldung: 18154738.1
(73) Patentinhaber: MAN Truck & Bus SE, 80995 München (DE)
(72) Erfinder: Römersperger, Xaver, 81543 München (DE); Dörner, Karlheinz, 85757 Karlsfeld (DE); Schwertberger, Walter, 82278 Althegnenberg (DE); Kraus, Sven, 85748 Garching (DE); Reule, Michael, 85354 Freising (DE)
(74) Vertreter: Liebl, Thomas

(56) Entgegenhaltungen:
- DE-A1-102005 042 957
- DE-A1-102011 114 977
- DE-A1-102012 003 027
- DE-A1-102012 016 708
- None

## Beschreibung

Die Erfindung betrifft ein Verfahren und ein Fahrerassistenzsystem zur Ermittlung fahrdynamischer Zustände eines Nutzfahrzeugs.

Informationen zu fahrdynamischen Zuständen eines Nutzfahrzeugs, insbesondere eines Nutzfahrzeuggespanns aus Zugfahrzeug und Anhänger/Auflieger sind wichtige Parameter für einen funktionellen und sicheren Fahrbetrieb. Solche Informationen können in Verbindung mit Fahrerassistenzsystemen einem Fahrer angezeigt und/oder für einen unmittelbaren selbsttätigen Eingriff in die Fahrdynamik verwendet werden.

Es ist allgemein bekannt fahrdynamische Zustände, wie zum Beispiel einen relativen Gierwinkel (Knickwinkel) zwischen Zugfahrzeug und Anhänger/Auflieger eines Gespanns oder einen Wankwinkel eines Anhängers/Aufliegers oder einen Fahrzeugstillstand mittels speziell ausgebildeter und angeordneter Sensoren zur ermitteln. Dies ist meist aufwendig und kostenintensiv.

Aus der DE 10 2012 016708 A1 ist ein Verfahren zur Überwachung eines kurveninneren Manövrierraumes eines aus einem Zugfahrzeug und geschleppten Teilen bestehenden Lastzuges bei einer Kurvenfahrt bekannt, wobei die auf die Fahrbahn projizierte Grundfläche des Manövrierraumes die Form eines Polygons hat, dessen die jeweiligen Knickwinkel des Lastzuges einschließende Seitenschenkel durch kurveninnere Seitenflächen von Zugfahrzeug und geschleppten Teilen des Lastzuges gebildet werden, und dessen Basisschenkel von einem die freien Enden der äußeren Seitenschenkel verbindenden, von einem an einer Seitenfläche des Zugfahrzeuges oder des letzten geschleppten Teils angeordneten Scanstrahlsender ausgehenden Scanstrahl definiert wird, welcher bei Erfassen eines im Manövrierraum befindlichen Störkörpers über eine zugeordnete Rechnereinheit ein Alarmsignal erzeugt. Konkret wird hier in einem Reflektionsmessverfahren ein Scanstrahl in Abhängigkeit von den jeweiligen Knickwinkeln des Lastzuges automatisch aus einer bei Geradeausfahrt zur zugeordneten Seitenfläche im wesentlichen parallelen Ausgangsrichtung nach außen so ausgelenkt, dass er zu jedem Zeitpunkt den Basisschenkel bildet, wobei der Scanstrahl zusätzlich eine vertikale Scanbewegung ausführt, bei der er den jeweiligen Basisschenkel überstreicht.

Die DE 10 2005 042 957 A1 betrifft ein Verfahren zur Bestimmung mindestens des Deichselwinkels und des Anhängerwinkels eines Anhängers eines Gliederzugs.

Die DE 10 2011 114 977 A1 betrifft eine Einrichtung zur Regelung der Fahrdynamik eines Fahrzeugs mit einer federnd gegenüber einem Rahmen des Fahrzeugs gelagerten Fahrerkabine, wobei die Einrichtung Lenkwinkelsensormittel zum Messen eines Lenkwinkels, Gierratensensormittel zum Messen einer Gierrate der Fahrerkabine sowie weitere Sensormittel zum Ermitteln einer Auslenkung der Fahrerkabine aus einer Referenzposition aufweist.

Die DE 10 2012 003 027 A1 betrifft ein Fahrerassistenzsystem für ein Fahrzeug mit einer ersten Kamera im Frontbereich des Fahrzeugs, deren vertikaler proximaler Erfassungsbereich in Fahrtrichtung derart vorgebbar ist, dass eine Fahrbahnoberfläche in einem Abstand ab etwa 6 bis 8 Metern vor dem vorderen Ende des Fahrahrzeugs erfassbar ist. Weiter ist eine zweite Kamera im Frontbereich des Fahrzeugs vorgesehen, deren vertikaler proximaler Erfassungsbereich in Fahrtrichtung derart vorgebbar ist, dass eine Fahrbahnoberfläche ab oder kurz vor dem vorderen Ende des Fahrzeugs erfassbar ist.

Aufgabe der Erfindung ist es, ein Verfahren und ein Fahrerassistenzsystem vorzuschlagen, mit dem fahrdynamische Informationen über das Nutzfahrzeug relativ einfach, sicher und kostengünstig erhalten werden können.

Diese Aufgabe wird hinsichtlich des Verfahrens gemäß Anspruch 1 dadurch gelöst, dass aus dem Kamerabild wenigstens einer, insbesondere in Fahrzeug-Längsrichtung ausgerichteten, Kamera des Nutzfahrzeugs mittels einer Bildverarbeitungsvorrichtung wenigstens eine fahrdynamische Informationen über das Nutzfahrzeug, insbesondere über einen Anhänger/Auflieger und/oder ein Zugfahrzeug eines Nutzfahrzeug-Gespanns, extrahiert wird.

Zweckmäßig sind dazu eine oder mehrere Kameras am Zugfahrzeug eines Nutzfahrzeuggespanns so angebracht, dass ein Anhänger/Auflieger zumindest in wenigstens einem Teil der möglichen Fahrstellungen zumindest teilweise im Bild erfasst wird. Solche Kameras sind beispielsweise als Bestandteil von Rangier-Assistenzsystemen ohnehin häufig an Nutzfahrzeugen angeordnet und können damit in einer weiteren Funktion für die erfindungsgemäße Ermittlung fahrdynamischer Zustände kostengünstig genutzt werden, indem Videobildmaterial hinsichtlich seines fahrdynamischen Informationsgehalts ausgewertet wird. Des Weiteren ist die Begrifflichkeit Kamera hier ausdrücklich in einem weiten Sinn zu verstehen, so dass die Kamera als jegliche Art von Bild-Erfassungseinrichtung ausgebildet sein kann, mittels der Bilder erfasst werden können.

Der relative Gierwinkel, auch Knickwinkel genannt, zwischen Zugfahrzeug und Anhänger/Auflieger eines Nutzfahrzeug-Gespanns ist eine maßgebliche Information eines fahrdynamischen Zustands im Fahrbetrieb. Erfindungsgemäß wird der relative Gierwinkel dadurch ermittelt, dass eine, in Fahrzeug-Längsrichtung gesehen, vordere, vertikale Außenkante eines Anhängers/Aufliegers von mindestens einer je Fahrzeugseite, in Fahrzeug-Längsrichtung gesehen, nach hinten gerichteten Kamera erkannt und erfasst wird. Bei einer längs ausgerichteten Gespannstellung ist der Gierwinkel 0. Wenn jedoch beispielsweise bei einer Kurvenfahrt ein relativer Gierwinkel als Knickwinkel zwischen Zugfahrzeug und Anhänger/Auflieger auftritt, verschiebt sich die aktuelle Kantenposition der vorderen Außenkante bezüglich der Kantenposition bei einer längs ausgerichteten Gespannstellung. Die Größe einer solchen Verschiebungsstrecke kann durch Auswertung des Kamerabildes ermittelt werden. Aus der jeweils aktuellen Kantenposition bzw. der Größe der Verschiebungsstrecke sowie unveränderlichen geometrischen Werten, insbesondere der Lage des Anhänger/Auflieger-Drehpunkts und der Anhänger/Auflieger-Breite, wird dann der relative Gierwinkel einfach, beispielsweise durch trigonometrische Beziehungen berechnet werden.

Vorteilhaft kann somit der jeweils aktuelle relative Gierwinkel schnell, einfach und funktionssicher berechnet werden und als Gierwinkelwert in einem Fahrerassistenzsystem einem Fahrer unmittelbar angezeigt und/oder für Fahrstabilisierungsmaßnahmen verwendet werden.

Anstelle einer Kantendetektion einer, in Fahrzeug-Längsrichtung gesehen, vorderen vertikalen Außenkante kann der relative Gierwinkel als Knickwinkel weiter erfindungsgemäß auch durch eine Kantendetektion einer, in Fahrzeug-Längsrichtung gesehen, hinteren vertikalen Außenkante in ähnlicher Weise ermittelt werden. Auch hier wird somit aus der Abweichung der aktuellen Kantenposition von der Kantenposition bei einem längs ausgerichteten Gespann bei Kenntnis der unveränderlichen Lage des Anhänger/Auflieger-Drehpunkts sowie der Abmessungen, insbesondere der Länge und Breite des Anhängers/Aufliegers in Verbindung mit der Kameraposition der relative Gierwinkel als Knickwinkel berechnet.

Beide erfindungsgemäßen Verfahren können auch kombiniert werden, so dass die Ermittlung des relativen Gierwinkels durch die Detektion der Positionen der Vorder- und Hinterkante des Anhängers/Aufliegers erfolgt. Damit können gegebenenfalls die Messgenauigkeit gesteigert und eine Redundanz für eine sichere Erfassung hergestellt werden.

Auch der relative Wankwinkel eines Anhängers/Aufliegers, das heißt seine seitliche Neigung bezüglich einer Lotsenkrechten zur Bodenebene ist eine fahrdynamisch wesentliche Information. Zur Ermittlung des relativen Wankwinkels wird gemäß einer nicht erfindungsgemäßen Ausführungsform ebenfalls das Videobildmaterial geeignet ausgewertet: dazu wird eine, in Fahrzeug-Längsrichtung gesehen, hintere und/oder vordere vertikale Außenkante eines Anhängers/Aufliegers von mindestens einer je Fahrzeugseite, in Fahrzeug-Längsrichtung gesehen, nach hinten gerichteten Kamera erfasst und eine Lotsenkrechte zur Bodenebene bestimmt. Mit einer Winkelauswertung wird der aktuelle relative Wankwinkel als Winkel zwischen der Lotsenkrechten und der hinteren und/oder vorderen vertikalen Außenkante des Anhängers/Aufliegers ermittelt. Der damit erhaltene Wankwinkelwert wird dann für eine weitere Verarbeitung in einem Fahrerassistenzsystem für eine Anzeige oder einen korrigierenden Eingriff verwendet. Die Lage der Lotsenkrechten zur Bodenebene kann aus einer bekannten Einbauposition und Ausrichtung einer am Zugfahrzeug, insbesondere am Fahrerhaus angeordneten Kamera bestimmt werden, wobei gegebenenfalls ein Wanken des Fahrerhauses festgestellt und korrigierend berücksichtigt wird. Alternativ oder zusätzlich kann die Bodenebene und damit eine zugeordnete Lotsenkrechte auch beispielsweise mittels einer Stereokamera und/oder einer Monokamera und geeigneten Bildverarbeitungsalgorithmen bestimmt werden.

Nach dem Stand der Technik können in allgemein bekannter Weise die Fahrgeschwindigkeit und der Stillstand eines Nutzfahrzeugs, insbesondere eines Nutzfahrzeug-Gespanns relativ kostengünstig mittels Drehzahlsensoren bestimmt werden. Nachteilig funktionieren aber diese Sensoren nicht bis zum völligen Stillstand sondern nur bis zu einer unteren Geschwindigkeitsgrenze, so dass ein sehr langsames Wegrollen des Fahrzeugs nicht sicher detektiert wird. Nachteilig kann auch die Drehrichtung und somit die Fahrtrichtung eines langsam wegrollenden Fahrzeugs nicht mit solchen Drehzahlsensoren bestimmt werden.

Daher wird gemäß einer weiteren nicht erfindungsgemäßen Ausgestaltung vorgeschlagen, aus einem Kamerabild mittels der Bildverarbeitungsvorrichtung, zum Beispiel aus einem optischen Fluss eine Relativbewegung oder einen Stillstand zwischen dem Nutzfahrzeug-Gespann und einem erfassten Hintergrund, insbesondere einer Fahrbahn zu erkennen. Wenn eine Relativbewegung festgestellt wird, kann zudem durch Auswertung von Bewegungsvektoren des optischen Flusses die Bewegungsrichtung des Nutzfahrzeugs vorwärts oder rückwärts festgestellt werden. Die entsprechenden Signale können dann in einem Fahrerassistenzsystem, zum Beispiel für eine optische Darstellung auf einem Display für den Fahrer oder für eine selbsttätige Bremsung verwertet werden.

Weiter werden ein Fahrerassistenzsystem gemäß Anspruch 3 ein Fahrzeug gemäß Anspruch 4 beansprucht, die Komponenten aufweisen, mit denen die erfindungsgemäßen Verfahrensmerkmale und Verfahrensschritte ausführbar sind.

Anhand einer Zeichnung wird die Erfindung weiter erläutert.

Es zeigen:
- Fig. 1: eine schematische Draufsicht auf ein Nutzfahrzeug-Gespann mit zwei schematischen Kamerabildern zur erfindungsgemäßen Ermittlung eines relativen Gierwinkels,
- Fig. 2: eine beispielhafte konkretere Darstellung des rechten oberen Kamerabildes aus Fig. 1,
- Fig. 3: eine Kamerabilddarstellung einer nicht erfindungsgemäßen Ausführungsform zur Ermittlung eines relativen Wankwinkels, und
- Fig. 4: ein Flussdiagramm zum erfindungsgemäßen Verfahren zur Ermittlung eines relativen Gierwinkels.

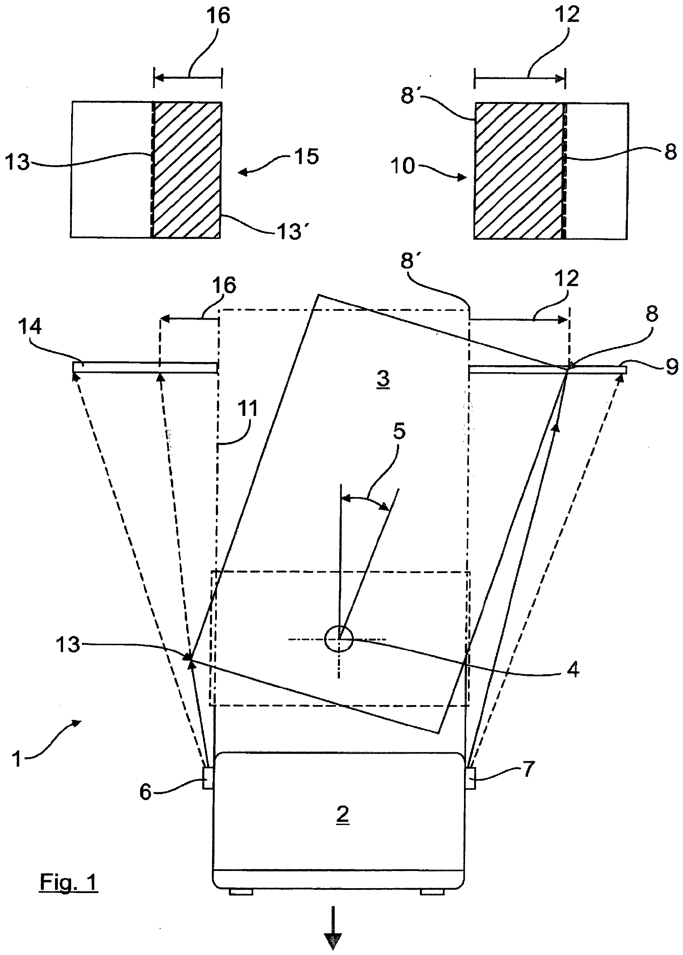

In Fig. 1 ist stark schematisiert eine Draufsicht auf ein Nutzfahrzeug-Gespann 1 aus einem Zugfahrzeug 2 und einem Auflieger 3 dargestellt.

Das Nutzfahrzeug-Gespann 1 befindet sich in einer Kurvenfahrt, wodurch der Auflieger 3 vom Zugfahrzeug 2 um den Aufliegerdrehpunkt 4 um einen relativen Gierwinkel als Knickwinkel 5 verschwenkt gezogen wird.

An beiden Längsseiten des Fahrerhauses ist am Zugfahrzeug 2 jeweils eine gleiche Kamera 6 und 7 angeordnet. Die Kameras 6, 7 sind so ausgerichtet, dass sie den Auflieger 3 in seinen unterschiedlichen Fahrstellungen im Seitenbereich erfassen. Das Nutzfahrzeug-Gespann 1 befindet sich hier in einer Linkskurve, so dass die, in Fahrzeug-Längsrichtung x gesehen, hintere vertikale Außenkante 8 des Aufliegers 3 fahrerseitig ausgeschwenkt ist und von der fahrerseitigen Kamera 7 erfasst wird. Dazu ist in einer Querebene durch die hintere vertikale Außenkante 8 schematisch ein virtuelles, vertikales Kamerabild 9 (oder Bildausschnitt) dargestellt, welches darüber als horizontales Kamerabild 10 in die Zeichenebene geklappt dargestellt ist.

Mit einer strichlierten Linie 11 ist der Auflieger 3 bei einer Geradeausfahrt bzw. bei einem längs ausgerichteten Nutzfahrzeug-Gespann 1 dargestellt. Bei diesem Fahrzustand würde die hintere vertikale Außenkante 8' von der fahrerseitigen Kamera 7 am linken Seitenrand der Kamerabilder 9 bzw. 10 gesehen und erfasst werden. Bei der dargestellten Kurvenfahrt liegt dagegen die hintere vertikale Außenkante 8 demgegenüber um die, in Fahrzeug-Querrichtung y gesehen, seitliche Verschiebestrecke 12 nach rechts versetzt im Kamerabild. Aus der Größe der variablen Verschiebestrecke 12 kann in Verbindung mit den unveränderlichen geometrischen Abmessungen, insbesondere der Anordnung und Ausrichtung der Kamera 7, der Lage des Aufliegerdrehpunkts 4 und der bekannten Abmessungen des Aufliegers 3, der Knickwinkel 5 berechnet und extrahiert werden.

In analoger Weise kann alternativ oder zusätzlich der Knickwinkel 5 auch durch eine Kantendetektion einer, in Fahrzeug-Längsrichtung x gesehen, vorderen vertikalen Außenkante 13 ermittelt werden. Dabei wird bei der dargestellten Kurvenfahrt die rechte vordere vertikale Außenkante 13 detektiert, welche beifahrerseitig ausschwenkt und durch die beifahrerseitige Kamera 6 erfasst wird. Für einen Vergleich mit dem vorbeschriebenen Kamerabild 9 ist hier in derselben vertikalen Querebene ein entsprechendes vertikales Kamerabild 14 dargestellt, der darüberliegend als horizontales Kamerabild 15 in die Zeichenebene geklappt ist. Auch hier ist die aktuellen Außenkantenposition 13 gegenüber der Lage der vorderen vertikalen Außenkante 13' bei einem längs ausgerichteten Nutzfahrzeug-Gespann um die Verschiebestrecke 16 versetzt. Aus der Größe der Verschiebestrecke 16 kann auch hier in Verbindung mit den bekannten Aufliegerabmessungen und der bekannten Lage des Aufliegerdrehpunkts 4 der jeweils zugeordnete aktuelle Knickwinkel 5 ermittelt werden.

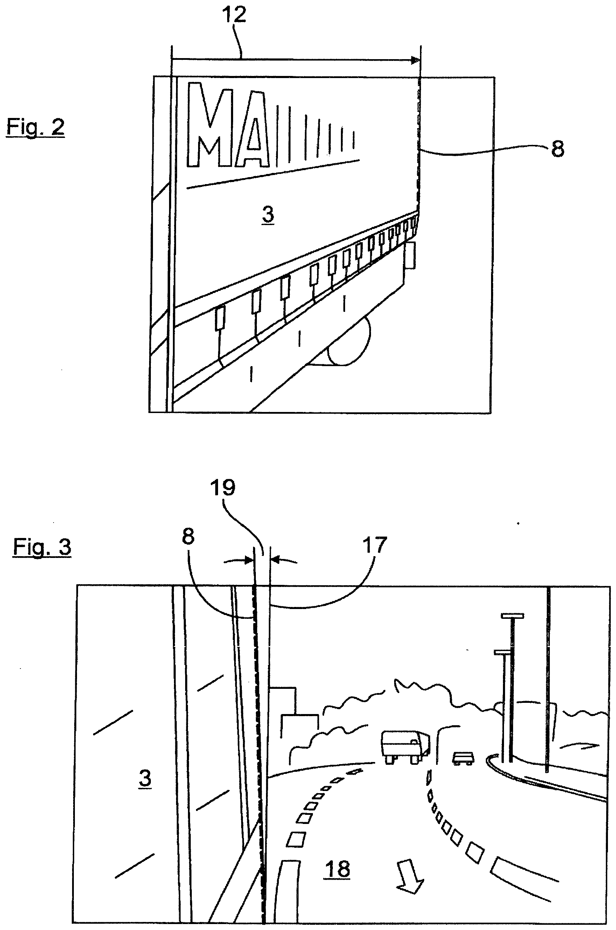

In Fig. 2 ist eine konkretere Darstellung des Kamerabilds 10 aus Fig. 1 wiedergegeben, aus der zu entnehmen ist, dass insbesondere eine, in Fahrzeug-Längsrichtung x gesehen, hintere vertikale Außenkante 8 im oberen Bereich des Aufliegers für die verwendeten Bildverarbeitungsalgorithmen zur Bestimmung des Knickwinkels 5 relevant ist.

In Fig. 3 ist ein Kamerabild der fahrerseitigen Kamera 7 gezeigt, bei dem die Position der hinteren vertikalen Außenkante 8 des Aufliegers 3 zur Ermittlung eines Wankwinkels des Aufliegers 3 ausgewertet wird. Dazu wird virtuell eine Lotsenkrechte 17 zur Bodenebene 18 quer zur hinteren vertikalen Außenkante 8 errichtet. Der sich ergebende Winkel zwischen der Außenkante 8 und der Lotsenkrechten 17 ist der aktuelle relative Wankwinkel 19.

Mit einer Kameraausrichtung entsprechend Fig. 3 oder einer noch weiter nach unten zur Fahrbahn ausgerichteten Kamera kann auch ein Fahrzeugstillstand und/oder eine geringe Rollgeschwindigkeit in Verbindung mit der Bewegungsrichtung vorwärts oder rückwärts durch eine Auswertung zum Beispiel des Kamerabilds nach Fig. 2 ermittelt werden. Mittels Bildverarbeitungsalgorithmen wird dabei der optische Fluss analysiert und es werden eine Relativbewegung oder ein Stillstand zwischen dem Nutzfahrzeug-Gespann und einem erfassten Hintergrund, insbesondere der Fahrbahn 18 einschließlich der Bewegungsrichtung erkannt.

Die ermittelten Informationen zu den fahrdynamischen Zuständen des Knickwinkels, des Wankwinkels und eines Gespannstillstands oder Wegrollens können in entsprechenden Fahrerassistenzsystemen zu Warnsignalen für den Fahrer und/oder zu selbsttätigen Fahreingriffen für eine Fahrstabilisierung verwendet werden.

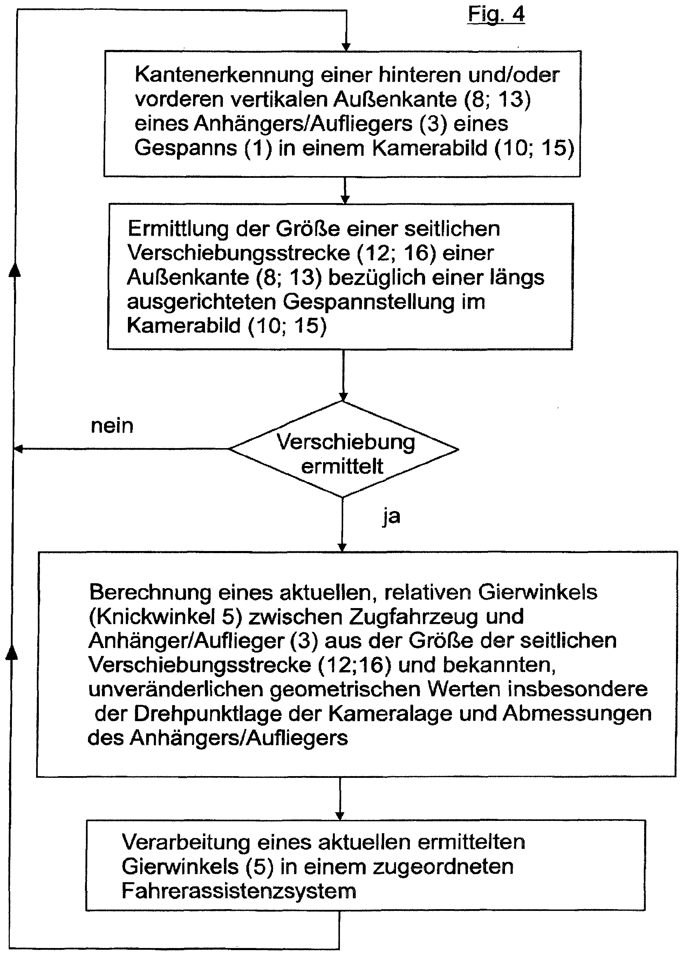

In Fig. 4 ist beispielhaft ein Flussdiagramm für das anhand von Fig. 1 erläuterte Verfahren zur Bestimmung des relativen Gierwinkels bzw. Knickwinkels 5 angegeben:
In einem ersten Verfahrensschritt erfolgt eine Kantenerkennung einer, in Fahrzeug-Längsrichtung x gesehen, hinteren und/oder vorderen vertikalen Außenkante 8, 13 des Aufliegers 3 des Gespannes 1 in einem Kamerabild 10, 15. In einem nächsten Verfahrensschritt wird die Größe einer, Fahrzeug-Querrichtung y gesehen, seitlichen Verschiebungsstrecke 12, 16 einer Außenkante 8, 13 bezüglich einer längs ausgerichteten Gespannstellung im Kamerabild 10, 15 ermittelt. In der nachfolgenden Entscheidungsraute wird festgestellt, ob eine solche Verschiebungsstrecke 12, 16 vorliegt: Wenn nicht, ist das Gespann längs ohne Knickwinkel ausgerichtet. Wenn eine Verschiebungsstrecke 12, 16 ermittelt wird, wird damit ein aktueller relativer Gierwinkel (Knickwinkel) unter Verwendung der bekannten unveränderlichen Lagen und Abmessungen der Kameras, des Drehpunkts und des Aufliegers berechnet. In einem letzten Verfahrensschritt werden die aktuell ermittelten Gierwinkelwerte in einem zugeordneten Fahrerassistenzsystem für eine weitere Verwendung zur Verfügung gestellt.

### Bezugszeichenliste

- 1: Nutzfahrzeug-Gespann
- 2: Zugfahrzeug
- 3: Auflieger
- 4: Auflieger-Drehpunkt
- 5: Knickwinkel (relativer Gierwinkel)
- 6: Kamera
- 7: Kamera
- 8, 8': hintere, vertikale Außenkante
- 9: vertikales Kamerabild
- 10: horizontales Kamerabild
- 11: strichlierte Linie
- 12: Verschiebestrecke
- 13, 13': vordere, vertikale Außenkante
- 14: vertikales Kamerabild
- 15: horizontales Kamerabild
- 16: Verschiebestrecke
- 17: Lotsenkrechte
- 18: Bodenebene
- 19: relativer Wankwinkel

## Patentansprüche

1. Verfahren zur Ermittlung fahrdynamischer Zustände eines Nutzfahrzeugs, wobei aus dem Kamerabild (10, 15) wenigstens einer Kamera (6, 7) des Nutzfahrzeugs mittels einer Bildverarbeitungsvorrichtung wenigstens eine fahrdynamische Information über das Nutzfahrzeug extrahiert wird, wobei eine Information der relative Gierwinkel als Knickwinkel (5) zwischen Zugfahrzeug (2) und Anhänger/Auflieger (3) ist und dieser dergestalt ermittelt wird,
dass eine, in Fahrzeug-Längsrichtung (x) gesehen, vordere, vertikale Außenkante (13) und/oder eine, in Fahrzeug-Längsrichtung (x) gesehen, hintere, vertikale Außenkante (8) eines Anhängers/Aufliegers (3) von mindestens einer je Fahrzeugseite, in Fahrzeug-Längsrichtung (x) gesehen, nach hinten gerichteten Kamera (6) erfasst wird,
die aktuelle Kantenposition der vorderen Außenkante (13) und/oder der hinteren Außenkante (8), insbesondere die Größe einer, in Fahrzeugquerrichtung (y) gesehen, seitlichen Verschiebungsstrecke (16;12), bezüglich einer Kantenposition (13'; 8') bei einer längs ausgerichteten Gespannstellung ermittelt wird, und
aus dieser aktuellen Kantenposition und unveränderlichen geometrischen Werten, insbesondere der Lage des Anhänger/Auflieger-Drehpunkts (4) und der Anhänger/Auflieger-Breite, der relative Gierwinkel zwischen Zugfahrzeug (2) und Anhänger/Auflieger (3) als Knickwinkel (5) berechnet wird.

2. Verfahren nach Anspruch 1, **dadurch gekennzeichnet, dass** wenigstens eine Kamera (6, 7) am Zugfahrzeug (2) eines Nutzfahrzeug-Gespanns (1) angebracht ist, und die Ausrichtung der wenigstens einen Kamera (6, 7) so gewählt ist, dass ein Anhänger/Auflieger (3) zumindest in wenigstens einem Teil der möglichen Fahrstellungen zumindest teilweise im Kamerabild (10, 15) erfasst wird.

3. Fahrerassistenzsystem zur Ermittlung fahrdynamischer Zustände eines Nutzfahrzeugs, wobei aus dem Kamerabild (10, 15) wenigstens einer Kamera (6, 7) des Nutzfahrzeugs mittels einer Bildverarbeitungsvorrichtung wenigstens eine fahrdynamische Information über das Nutzfahrzeug extrahierbar ist,
wobei eine Information ein relativer Gierwinkel als Knickwinkel (5) zwischen Zugfahrzeug (2) und Anhänger/Auflieger (3) ist und dieser dergestalt ermittelbar ist,
dass eine, in Fahrzeug-Längsrichtung (x) gesehen, vordere, und/oder hintere vertikale Außenkante (13; 8) eines Anhängers/Aufliegers (3) von mindestens einer je Fahrzeugseite, in Fahrzeug-Längsrichtung (x) gesehen, nach hinten gerichteten Kamera (6; 7) erfassbar ist,
die aktuelle Kantenposition der vorderen und/oder hinteren Außenkante (13; 8), insbesondere die Größe einer, in Fahrzeug-Querrichtung (y) gesehen, seitlichen Verschiebungsstrecke (16; 22), bezüglich einer Kantenposition (13'; 8') bei einer längs ausgerichteten Gespannstellung ermittelbar ist,
und aus der aktuellen Kantenposition und unveränderlichen geometrischen Werten, insbesondere der Lage des Anhänger/Auflieger-Drehpunkts (4) und der Anhänger/Auflieger-Breite, der relative Gierwinkel zwischen Zugfahrzeug (2) und Anhänger/Auflieger (3) als Knickwinkel (5) berechenbar ist.

4. Fahrzeug, insbesondere Nutzfahrzeug, zur Durchführung eines Verfahrens nach einem der Ansprüche 1 oder 2 und/oder mit einem Fahrerassistenzsystem nach Anspruch 3.

## Claims

1. Method for determining driving dynamics states of a utility vehicle, wherein at least one item of driving dynamics information about the utility vehicle is extracted from the camera image (10, 15) of at least one camera (6, 7) of the utility vehicle by way of an image processing device, wherein
one item of information is the relative yaw angle as articulation angle (5) between towing vehicle (2) and trailer/semitrailer (3), and this is determined such that
a front, vertical outer edge (13), as seen in the vehicle longitudinal direction (x), and/or a rear, vertical outer edge (8), as seen in the vehicle longitudinal direction (x), of a trailer/semitrailer (3) is recorded by at least one camera (6) per vehicle side, directed toward the rear as seen in the vehicle longitudinal direction (x),
the current edge position of the front outer edge (13) and/or of the rear outer edge (8), in particular the magnitude of a lateral displacement distance (16; 12), as seen in the vehicle transverse direction (y), with respect to an edge position (13'; 8') is determined in the case of a longitudinally oriented pairing position, and
the relative yaw angle between towing vehicle (2) and trailer/semitrailer (3) is calculated as articulation angle (5) from this current edge position and unchangeable geometric values, in particular the absolute position of the trailer/semitrailer articulation point (4) and the trailer/semitrailer width.

2. Method according to Claim 1, **characterized in that** at least one camera (6, 7) is installed on the towing vehicle (2) of a utility vehicle pairing (1), and the orientation of the at least one camera (6, 7) is selected such that a trailer/semitrailer (3) is at least partially recorded in the camera image (10, 15) in at least some of the possible driving positions.

3. Driver assistance system for determining driving dynamics states of a utility vehicle,
wherein at least one item of driving dynamics information about the utility vehicle is able to be extracted from the camera image (10, 15) of at least one camera (6, 7) of the utility vehicle by way of an image processing device, wherein
one item of information is a relative yaw angle as articulation angle (5) between towing vehicle (2) and trailer/semitrailer (3), and this is able to be determined such that
a front and/or rear vertical outer edge (13; 8), as seen in the vehicle longitudinal direction (x), of a trailer/semitrailer (3) is able to be recorded by at least one camera (6; 7) per vehicle side, directed toward the rear as seen in the vehicle longitudinal direction (x),
the current edge position of the front and/or rear outer edge (13; 8), in particular the magnitude of a lateral displacement distance (16; 22), as seen in the vehicle transverse direction (y), is able to be determined with respect to an edge position (13'; 8') in the case of a longitudinally oriented pairing position, and
the relative yaw angle between towing vehicle (2) and trailer/semitrailer (3) is able to be calculated as articulation angle (5) from the current edge position and unchangeable geometric values, in particular the absolute position of the trailer/semitrailer articulation point (4) and the trailer/semitrailer width.

4. Vehicle, in particular utility vehicle, for performing a method according to either of Claims 1 and 2 and/or having a driver assistance system according to Claim 3.

## Revendications

1. Procédé permettant d'établir des états dynamiques de conduite d'un véhicule utilitaire, dans lequel au moins une information de dynamique de conduite concernant le véhicule utilitaire est extraite à partir de l'image de caméra (10, 15) d'au moins une caméra (6, 7) du véhicule utilitaire, au moyen d'un dispositif de traitement d'image,
une information étant l'angle d'embardée relatif comme l'angle d'articulation (5) entre un véhicule tracteur (2) et une remorque/semi-remorque (3), et celui-ci est établi de telle sorte qu'un bord extérieur vertical avant (13), vu dans la direction longitudinale du véhicule (x), et/ou un bord extérieur vertical arrière (8), vu dans la direction longitudinale du véhicule (x) d'une remorque/semi-remorque (3) est détecté par au moins une caméra (6) par côté de véhicule, tournée vers l'arrière, vue dans la direction longitudinale du véhicule (x),
la position de bord actuelle du bord extérieur avant (13) et/ou du bord extérieur arrière (8), en particulier la dimension d'un trajet de décalage latéral (16 ; 12), vue dans la direction transversale du véhicule (y), étant établie par rapport à une position de bord (13' ; 8') pour une position d'attelage alignée dans le sens de la longueur, et
à partir de cette position de bord actuelle et de valeurs géométriques invariables, en particulier de la position du point de pivotement de la remorque/semi-remorque (4) et la largeur de remorque/semi-remorque, l'angle d'embardée relatif entre le véhicule tracteur (2) et la remorque/semi-remorque (3) est calculé comme l'angle d'articulation (5).

2. Procédé selon la revendication 1, **caractérisé en ce qu'**au moins une caméra (6, 7) est installée sur le véhicule tracteur (2) d'un attelage de véhicule utilitaire (1), et l'alignement de ladite au moins une caméra (6, 7) est choisi de telle sorte qu'une remorque/semi-remorque (3) est détecté(e) au moins partiellement sur l'image de caméra (10, 15) au moins dans au moins une partie des positions de conduite possibles.

3. Système d'assistance au conducteur permettant d'établir des états dynamiques de conduite d'un véhicule utilitaire, dans lequel au moins une information dynamique de conduite concernant le véhicule utilitaire est extraite à partir de l'image de caméra (10, 15) d'au moins une caméra (6, 7) du véhicule utilitaire, au moyen d'un dispositif de traitement d'image,
une information étant un angle d'embardée relatif comme l'angle d'articulation (5) entre un véhicule tracteur (2) et une remorque/semi-remorque (3), et celui-ci est établi de telle sorte qu'un bord extérieur vertical avant (13), vu dans la direction longitudinale du véhicule (x), et/ou un bord extérieur vertical arrière (8), vu dans une direction longitudinale du véhicule (x) d'une remorque/semi-remorque (3) est détecté par au moins une caméra (6 ; 7) par côté de véhicule, tournée vers l'arrière, vue dans la direction longitudinale du véhicule (x),
la position de bord actuelle du bord extérieur avant (13) et/ou du bord extérieur arrière (8), en particulier la dimension d'un trajet de décalage latéral (16 ; 22), vue dans la direction transversale du véhicule (y), est établie par rapport à une position de bord (13' ; 8') pour une position d'attelage alignée dans le sens de la longueur, et
à partir de cette position de bord actuelle et de valeurs géométriques invariables, en particulier de la position du point de pivotement de la remorque/semi-remorque (4) et la largeur de remorque/semi-remorque, l'angle d'embardée relatif entre le véhicule tracteur (2) et la remorque/semi-remorque (3) peut être calculé comme l'angle d'articulation (5).

4. Véhicule, en particulier véhicule utilitaire, destiné à l'exécution d'un procédé selon l'une quelconque des revendications 1 et 2, et/ou comprenant un système d'assistance au conducteur selon la revendication 3.
